# EUROPÄISCHE PATENTANMELDUNG

(11) **EP 4 697 507 A1**
(43) Veröffentlichungstag der Anmeldung: **18.02.2026**
(21) Anmeldenummer: 24194978.3
(22) Anmeldetag: 16.08.2024
(51) Int. Cl.: H01R 4/02, B23K 20/10, H01R 43/02

(54) **VERFAHREN ZUM VERBINDEN VON ELEKTRISCHEN LEITERN, INSBESONDERE MIT ULTRASCHALLSCHWINGUNGEN, VERBINDUNGS-, INSBESONDERE ULTRASCHALLVERBINDUNGSVORRICHTUNG, VERFAHREN ZUM VERBINDEN VON ELEKTRISCHEN LEITERN MIT DER VERBINDUNGSVORRICHTUNG SOWIE SONOTRODE UND VERFAHREN MIT EINER SONOTRODE ZUM VERBINDEN VON ELEKTRISCHEN LEITERN**

(71) Anmelder: Telsonic Holding AG, 9552 Bronschhofen (CH)
(72) Erfinder: Mostafavi, Shimaalsadat, 8404 Winterhur (CH); Dobler, Rafael, 9552 Bronschhofen (CH)
(74) Vertreter: Hepp Wenger Ryffel AG

(57) **Zusammenfassung**

Ein Verfahren zum Verbinden einer Vielzahl von elektrischen Leitern (11, 12, 13) an Verbindungsbereichen (111, 121, 131) der elektrischen Leiter (11, 12, 13) umfasst das Bereitstellen eines Verdichtungsbereichs (2), der begrenzt ist durch mindestens zwei Seitenwände einen Amboss (3) und eine Sonotrode (201). Danach werden mindestens zwei Verbindungsbereiche (111, 121) der elektrischen Leiter (11, 12) in den Verdichtungsbereich (2), eingeführt, die Sonotrode (201) auf zumindest einem der Verbindungsbereiche (111, 121) in dem Verdichtungsbereich (2) positioniert und die Sonotrode mit Ultraschallschwingungen zum Ultraschallverbinden der mindestens zwei Verbindungsbereiche (111, 121) und zum Erzeugen eines ersten Knotens (14) beaufschlagt. Nach dem Entfernen der Sonotrode (201) aus dem Verdichtungsbereich (2), wird ein weiterer Verbindungsbereich (131) eines weiteren elektrischen Leiters (13) auf dem ersten Knoten (14) angelegt und die Sonotrode (201) auf dem weiteren Verbindungsbereich (131) positioniert. Die Sonotrode (201) wird dann mit Ultraschallschwingungen zum Ultraschallverbinden des weiteren Verbindungsbereichs (131) mit dem ersten Knoten (14) beaufschlagt.

## Beschreibung

Die Erfindung richtet sich auf ein Verfahren zum Verbinden von elektrischen Leitern, insbesondere mit Ultraschallschwingungen, eine Verbindungsvorrichtung, insbesondere eine Ultraschallvorrichtung, und ein Verfahren mit der Verbindungsvorrichtung zum Verbinden von elektrischen Leitern sowie eine Sonotrode und ein Verfahren mit einer Sonotrode zum Verbinden von elektrischen Leitern gemäss den unabhängigen Ansprüchen. Es handelt sich dabei typischerweise um Leiter, welche eine isolierende Umhüllung aufweisen. Weitere Ausführungsformen ergeben sich aus den abhängigen Ansprüchen.

Mit den steigenden Anforderungen insbesondere aus der Elektromobilität und dem wachsenden Bedarf an Stromspeichern rücken zunehmend Aufgaben der sicheren Stromverteilung in den Fokus. Hohe Spannungen und starke Ströme nehmen zu, was erhöhte Herausforderungen an die Herstellungstechnologie stellt. Dazu gehören beispielsweise grosse Leitungsquerschnitte und mehrlagige Leitungsverbunde. In diesem Zusammenhang gewinnt das zuverlässige Verbinden von elektrischen Leitern besondere Bedeutung. Insbesondere für Leiter mit großem Querschnitt ist dies entscheidend, um mechanische Stabilität, eine effektive und sichere Stromübertragung sowie einen geringen Wartungsaufwand zu gewährleisten. Die Ultraschalltechnologie ermöglicht dabei eine zuverlässige und wirtschaftliche Herstellungsmöglichkeit, die eine hohe Produktionsqualität bei gleichzeitiger Kosteneffizienz sicherstellt. Es bestehen aber auch andere bekannte Verbindungsverfahrens, auf welche die vorliegende Erfindung gleichermassen anwendbar ist, insbesondere verschiedene formen von Reibschweissen mit unterschiedlichen Frequenzen. Die Erfindung wird vorliegend anhand des Beispiels Ultraschallschweissen erläutert.

WO 2015/007619 A1 offenbart eine Sonotrode zum Verschweissen von zwei oder mehr Litzen zu einem Knoten. Eine oder mehrere Litzen werden auf der Sonotrode in einem Verdichtungsraum angebracht und von einer Sonotrode von unten zuerst zu einem Teilknoten und anschliessend mit einer weiteren Litze oder Litzen verschweisst.

Das Verbinden von mehr als zwei elektrischen Leitern, insbesondere mit grosser Querschnittsdimension, zu einem Knoten ist jedoch oftmals zeitaufwendig, umständlich und komplex.

Es ist daher eine Aufgabe der vorliegenden Erfindung diese und andere Nachteile des Stands der Technik zu überwinden und ein Verfahren und eine Verbindungsvorrichtung, insbesondere eine Ultraschallvorrichtung, bereitzustellen, welche eine effektive, einfache, kostengünstige, und zuverlässige Lösung der obengenannten Probleme ermöglichen.

Diese Aufgabe wird durch ein erfindungsgemässes Verfahren zum Verbinden einer Vielzahl von elektrischen Leitern gelöst. Insbesondere wird durch in dem Verfahren ermöglicht, dass eine Sonotrode oder ein anderes, Energie einleitendes Werkzeug einen Verbindungsbereich eines weiteren elektrischen Leiters, der mit einem Knoten verbunden werden soll, von einer dem Werkzeug, insbesondere der Sonotrode zugewandten Seite kontaktiert, sodass eine erforderliche Schweissenergie zum Verbinden der Vielzahl von elektrischen Leitern besonders effektiv appliziert werden kann. Im Folgenden wird der Einfachheit halber die Erfindung mit Bezugnahme auf eine Sonotrode und auf Ultraschallschwingungen und Ultraschallenergie erläutert. Dabei verstehet es sich, dass die Sonotrode durch andere Werkzeuge zur Einbringung von Schweissenergie ersetzt werden kann, ohne dass der Rahmen der Erfindung verlassen wird.

Die erfindungsgemässe Lösung ermöglicht insbesondere ein zuverlässiges Verbinden von elektrischen Leitern, die eine grosse Querschnittsdimension aufweisen. Zudem kann vermieden werden, dass ein Knoten, an dem der weitere elektrische Leiter angebracht werden soll, aus dem Schweissraum entfernt und in anderer Lage erneut im Schweissraum positioniert werden muss, um weitere elektrische Leiter anzubringen.

Das Verfahren zum Verbinden einer Vielzahl von elektrischen Leitern an einer Vielzahl von elektrischen Leitern an Verbindungsbereichen der elektrischen Leiter umfasst ein Bereitstellen eines Verdichtungsbereichs, der begrenzt ist durch mindestens zwei Seitenwände, insbesondere umfassend mindestens einen Seitenschieber, einen Amboss, und eine Sonotrode. Die mindestens zwei Verbindungsbereiche der elektrischen Leiter werden in den Verdichtungsbereich eingeführt. Die Sonotrode wird auf zumindest einem der Verbindungsbereiche in dem Verdichtungsbereich positioniert. Die Sonotrode wird mit Ultraschallschwingungen beaufschlagt zum Ultraschallverbinden der mindestens zwei Verbindungsbereiche der elektrischen Leiter und zum Erzeugen eines ersten Knotens. Die Sonotrode wird dann vom Verbindungsbereich entfernt, so dass der Verdichtungsbereich geöffnet wird. Ein weiterer Verbindungsbereich eines weiteren elektrischen Leiters wird auf dem ersten Knoten angelegt, insbesondere in Richtung des Leiters und/oder quer zur Leiterrichtung von oben her. Die Sonotrode wird dann auf dem weiteren Verbindungsbereich positioniert. Die Sonotrode wird danach mit Ultraschallschwingungen beaufschlagt zum Ultraschallverbinden des weiteren Verbindungsbereichs mit dem ersten Knoten. Diese Schritte können mehrmals wiederholt werden.

Es ist dabei denkbar, dass Energie und insbesondere Ultraschallenergie von mehreren Seiten eingeleitet wird, beispielsweise durch eine erste Sonotrode und durch eine zweite Sonotrode, die einen aktiven Amboss bildet. In diesem Fall wird der weitere Verbindungsbereich von einer beliebigen, dem Schall zugewandten Seite her eingelegt. Zum vereinfachten Handling erfolgt das Einlegen dabei bevorzugt von oben her, so dass der weitere Verbindungsbereich aufgrund der Schwerkraft einfach auf den Konten gelegt werden kann.

Das Positionieren der Sonotrode auf dem zumindest einem Verbindungsbereich kann die Bewegung der Sonotrode entlang einer Vorschubrichtung umfassen. Das Entfernen der Sonotrode aus dem Verdichtungsbereich kann das Bewegen der Sonotrode in eine Rückschubrichtung von dem Verdichtungsbereich weg umfassen. Die Vorschubrichtung und/oder die Rückschubrichtung verlaufen quer zur Richtung der Leiter, insbesondere etwa 90°.

Das Positionieren der Sonotrode kann das Positionieren auf genau einem Verbindungsbereich/weiteren Verbindungsbereich umfassen, der der Sonotrode in Schubrichtung am nächsten ist, insbesondere ohne weitere Verbindungsbereiche zu berühren.

Zumindest eine, insbesondere zwei, der Seitenwände können einen Seitenschieber umfassen oder dadurch gebildet sein. Das Verfahren kann umfassen, dass der mindestens eine Seitenschieber in eine Betriebsposition bewegt wird. Der mindestens eine Seitenschieber kann in der Betriebsposition den Verdichtungsbereich zusammen mit einer Fläche des Ambosses abschliessen.

Dies ermöglicht es, zu verhindern, dass die Verbindungsbereiche der elektrischen Leiter oder einzelne Teile davon, wie Adern von Litzen sich im Betrieb aus dem Verdichtungsbereich herausbewegen, etwa seitlich nach aussen und/oder nach unten, insbesondere zwischen den Seitenschieber und den Amboss.

Der mindestens eine Seitenschieber, insbesondere zwei gegenüberliegende Seitenschieber, können zum Einstellen einer Breite des Verdichtungsbereichs und zum Ultraschallverbinden der Verbindungsbereiche in die Betriebsposition bewegbar sein.

Der mindestens eine Seitenschieber kann vor dem Ultraschallverbinden der zwei Verbindungsbereiche in die Betriebsposition bewegt werden und zumindest bis zum Ultraschallverbinden des weiteren Verbindungsbereichs mit dem ersten Knoten in der Betriebsposition bleiben. Bevorzugt bleibt er bis zum Ultraschallverbinden des Verbindungsbereichs mit dem letzten Knoten in der Betriebsposition.

Dies ermöglicht die Durchführung von mehrstufigen Ultraschallverbindungszyklen ohne eine Änderung der Breite des Verdichtungsbereichs, sodass verhindert werden kann, dass sich der Knoten bewegt, an den der zumindest eine weitere Verbindungsbereich angebracht wird.

Der Verdichtungsbereich kann geformt und dimensioniert sein, um gleichzeitig zumindest zwei Verbindungsbereiche der elektrischen Leiter aufzunehmen, insbesondere übereinander aufzunehmen. Zumindest ein Verbindungsbereich, insbesondere zwei Verbindungsbereiche, vorzugsweise alle Verbindungsbereiche können je eine Querschnittsfläche von 50-300 mm², bevorzugt etwa 100 - 200 mm² aufweisen.

Der Amboss kann eine Grundfläche des Verdichtungsbereichs bilden insbesondere eine im Wesentlichen horizontale Grundfläche. Dies ermöglicht eine einfache Platzierung der Verbindungsbereiche der elektrischen Leiter auf dem Amboss zur Durchführung des Verfahrens.

Der mindestens eine Seitenschieber und/oder der Amboss können horizontal und vertikal bewegbar sein, sodass der mindestens eine Seitenschieber mit der Fläche, insbesondere mit der Grundfläche, des Ambosses den Verdichtungsbereich abschliesst.

Dies ermöglicht, dass die Breite und/oder Höhe des Verdichtungsbereichs durch Bewegung des Seitenschiebers/Amboss angepasst werden kann und der Verdichtungsbereich zuverlässig abschliesst.

Die elektrischen Leiter können ein elektrisches Kabel umfassen oder daraus bestehen. Die Verbindungsbereiche können insbesondere Enden einer Litze umfassen oder daraus bestehen.

Zumindest einer der elektrischen Leiter, insbesondere alle elektrischen Leiter, können mit einer isolierenden Umhüllung versehen sein und der Verbindungsbereich der elektrischen Leiter kann von der Umhüllung befreit sein. Die Erfindung ist aber auch auf Leitern oder auf Bereichen von Leitern anwendbar, die keine isolierende Umhüllung aufweisen. Der Verbindungsbereich des elektrischen Leiters kann ein Endstück des elektrischen Leiters bilden. Er kann aber auch einen mittleren Abschnitt eines Leiters zur Bildung eines sogenannten Durchgangsknotens bilden.

Der erste Knoten der zwei Verbindungsbereiche kann relativ zum Verdichtungsbereich fixiert werden, zumindest bis der weitere Verbindungsbereich mit dem ersten Knoten verbunden wurde.

Somit kann der weitere Verbindungsbereich zuverlässig auf dem ersten Knoten angebracht werden, ohne dass sich der Knoten aus einer Ausgangslage bewegt, bewegt werden muss, und/oder die Position der Sonotrode, abgesehen von einer Vorschub-/Rückschubrichtung der Sonotrode, geändert werden muss.

Grosse Querschnitte und/oder eine insbesondere isolierende oder abschirmende Umhüllung der elektrischen Leiter, insbesondere eine Kabelumhüllung mit einer im wesentlichen runden Querschnittsfläche, bedingt oftmals einen grossen Höhenunterschied zwischen der Achse der zugeführten Leiter und dem Verbindungsbereich der durch Ultraschallverbinden. Dies ist insbesondere der Fall für elektrische Leiter, die eine hohe Querschnittsfläche haben, etwa eine Querschnittsfläche von mehr als 50 mm2, insbesondere eine Querschnittsfläche von mindestens 100 mm2. Dieser Höhenunterschied ist besonders relevant, wenn mehr als zwei elektrische Leiter zu einem Knoten verbunden werden und neben-/übereinander angeordnet werden müssen. Der Höhenunterschied in Kombination mit dem Druck auf die elektrischen Leiter durch einen bewegten Bestandteil, wie etwa die Sonotrode entlang einer Vorschub-/Rückschubrichtung, kann Bereiche des elektrischen Leiters abscheren, insbesondere die Einzeldrähte der Litzen eines Verbindungsbereichs abscheren.

Die Sonotrode kann zwei Verbindungsbereiche in einer Hubrichtung auf etwa 50% der Summe ihres vorherigen Querschnittsdurchmessers beim Ultraschallverbinden zusammenstauchen, wenn diese zu einem Knoten verbunden werden. Somit werden besonders in einem Übergangbereich des elektrischen Leiters zum Knoten hin besonders grosse Scherkräfte in einer Richtung quer zur Richtung des Leiters ausgeübt. Diese Problematik wird noch verstärkt, wenn ein weiterer elektrischer Leiter an dem Knoten angebracht wird, da der weitere elektrische Leiter durch die meist zylindrische isolierende Umhüllung zu einem noch grösseren Höhenunterschied führt. Somit werden die Verbindungsbereiche stark gestreckt und unter Umständen Bestandteile der Verbindungsbereiche durchtrennt und/oder aus dem Verdichtungsbereich verdrängt. Die Bestandteile der Verbindungsbereiche können Einzeldrähte einer Litze sein.

Es ist daher eine Aufgabe eines weiteren Aspekts der der vorliegenden Erfindung, diese und andere Nachteile des Stands der Technik zu überwinden. Insbesondere soll die Erfindung eine Verbindungsvorrichtung und ein Verfahren zum Ultraschallverbindung der elektrischen Leiter bereitzustellen, welche eine effektive, einfache, kostengünstige, und zuverlässige Lösung der obengenannten Aufgaben ermöglicht und die Scherkräfte auf den Leiter oder die Verbindungsbereiche in einer Richtung quer zur Richtung der Leiter reduziert.

Ein weiterer Aspekt der Erfindung richtet sich daher auf eine Verbindungsvorrichtung, insbesondere eine Ultraschallvorrichtung zum Verbinden von zumindest zwei elektrischen Leitern, welche bevorzugt eine isolierende Umhüllung aufweisen, zu einem ersten Knoten an Verbindungsbereichen der elektrischen Leiter, welche von der Umhüllung befreit sind. Die Verbindungsvorrichtung umfasst eine Sonotrode, die eine Arbeitsfläche aufweist, die in einer Vorschubrichtung gegen den Verbindungsbereich von zumindest einem der elektrischen Leiter andrückbar ist, um die Verbindungsbereiche zu einem ersten Knoten zu verbinden. Die Verbindungsvorrichtung beinhaltet ein Kompressionselement, das eine Kompressionsfläche aufweist, die im Wesentlichen in der Vorschubrichtung, gegen eine Umfangsfläche des elektrischen Leiters benachbart zum Verbindungsbereich, insbesondere gegen die isolierende Umhüllung des elektrischen Leiters andrückbar ist. Im Wesentlichen in der Vorschubrichtung bedeutet in diesem Zusammenhang, dass das Kompressionselement mit einer Kraft gegen die Umfangsfläche gedrückt wird, die zumindest eine Kraftkomponente senkrecht zur Achse des elektrischen Leiters aufweist. Bevorzugt verläuft der Vektor der durch das Kompressionselements ausgeübten Kraft bezogen auf die Vorschubrichtung unter einem Winkel von weniger als 45°, bevorzugt etwa parallel dazu.

Das Kompressionselement kann durch ein Profil, insbesondere ein Stahlprofil, gebildet werden. Das Profil kann eine bügelförmige Form aufweisen.

Das Kompressionselement und/oder die Sonotrode können in der Vorschubrichtung und einer Rückschubrichtung beweglich sein.

Die Verbindungsvorrichtung kann eine Positionierungseinheit umfassen, mit welcher die Arbeitsfläche der Sonotrode auf den Verbindungsbereich andrückbar ist und mit welcher die Kompressionsfläche des Kompressionselements insbesondere auf die isolierende Umhüllung, beschädigungsfrei andrückbar ist. Die Kompressionsfläche kann dabei zum Schutz der Isolierung mit einer geeigneten, nicht verletzenden Kontur und/oder einem geeigneten, ausreichend weichen Material ausgebildet oder versehen sein.

Dies ermöglicht eine einfache und zuverlässige Positionierung der Arbeitsfläche auf dem Verbindungsbereich und der Kompressionsfläche auf der isolierenden Umhüllung.

Die elektrischen Leiter können von beiden Seiten in einen durch die Sonotrode definierten Verdichtungsraum eingeführt werden. Es ist daher denkbar, ein Kompressionselement auf beiden Seiten des Verdichtungsbereichs vorzusehen.

Die Positionierungseinheit kann ein erstes Positionierungsmodul zum Positionieren der Arbeitsfläche umfassen. Die Positionierungseinheit kann ein zweites Positionierungsmodul zum Positionieren des Kompressionsfläche umfassen. Die Positionierungsmodule können unabhängig voneinander steuerbar sein, sodass etwa jeweils ein unterschiedlicher Druck durch die Arbeitsfläche und die Kompressionsfläche ausübbar ist.

Das Kompressionselement kann zwei oder mehr Kompressionsflächen umfassen, die geformt und dimensioniert sind, um die elektrische Leiter von gegenüberliegenden Seiten in der Vorschubrichtung und Rückschubrichtung zu kontaktieren und zusammenzudrücken.

Die Sonotrode und das Kompressionselement können in einer definierten räumlichen Beziehung zueinander fixiert oder fixierbar sein. Die Sonotrode und das Kompressionselement können gemeinsam mit der Positionierungseinheit bewegbar und gemeinsam auf den elektrischen Leiter andrückbar sein.

Dies ermöglicht einen einfachen Aufbau, um einen gleichmässigen Druck die Arbeitsfläche und der Kompressionsbereich auszuüben, da nur ein gemeinsames Positionierungsmodul der Positionierungseinheit zum Bewegen benötigt wird.

Sie können aber auch individuell bewegbar und ansteuerbar sein.

Bevorzugt ist ein im Wesentlichen gleichmässiger Druck auf den Verbindungsbereich und die isolierende Umhüllung ausübbar.

Die Positionierungseinheit, insbesondere zumindest eines der Positionierungsmodule, können einen pneumatischen, hydraulischen, elektrischen, oder mechanischen Aktuator zum Bewegen der Sonotrode/des Kompressionselements aufweisen.

Ein Abstand in der Vorschubrichtung und/oder ein Versatz quer zu der Vorschubrichtung der Kompressionsfläche relativ zur Arbeitsfläche kann änderbar sein.

Dies ermöglicht es, den Abstand/Versatz einzustellen, so dass elektrische Leiter mit unterschiedlichem Querschnittsdimensionen und/oder unterschiedlich dicken isolierenden Umhüllungen leichter verbunden werden können. Zudem kann durch die Einstellbarkeit des Versatzes sichergestellt werden, dass die Kompressionsfläche für unterschiedliche Längen der Verbindungsbereiche zuverlässig auf der isolierenden Umhüllung angebracht werden kann.

Die Verbindungsvorrichtung kann mindestens einen lösbaren Fixiermechanismus umfassen, um den Versatz/Abstand in einem gelösten Zustand einzustellen und in einem fixierten Zustand zu fixieren. Der Fixiermechanismus kann manuell bedienbar oder maschinell steuerbar sein.

Die Kompressionsfläche kann eine Breite von mehr als 8 mm, insbesondere mehr als 14 mm, vorzugsweise mehr als 17 mm aufweisen. Alternativ kann die Kompressionsfläche eine Breite von 19 mm oder mehr aufweisen.

Dies ermöglicht selbst grosse Querschnittsdimensionen von elektrischen Leitern, insbesondere von mehr als 95 mm², im Bereich der isolierenden Umhüllung zusammenzudrücken. Die elektrischen Leiter können einen kreisförmigen Querschnitt aufweisen.

Die Kompressionsfläche kann im Längsschnitt eine abgerundete Form aufweisen, sodass die Scherkräfte auf den elektrischen Leiter reduziert werden, beziehungsweise über einen grösseren longitudinalen Bereich des elektrischen Leiters verteilt werden. Die Kompressionsfläche kann im Querschnitt eine gerade Form im Wesentlichen parallel zur Arbeitsfläche der Sonotrode aufweisen. Somit kann der elektrische Leiter im Bereich der isolierenden Umhüllung im Wesentlichen in gleichem Masse wie der Verbindungsbereich durch die Arbeitsfläche nach unten gedrückt werden kann.

Ein weiterer Aspekt der Erfindung richtet sich auf ein Verfahren zum Verbinden von zumindest zwei, eine isolierende Umhüllung aufweisenden, elektrischen Leitern an Verbindungsbereichen der elektrischen Leiter, insbesondere unter Verwendung einer zuvor beschriebenen Verbindungsvorrichtung. Das Verfahren umfasst ein Positionieren von zwei Verbindungsbereichen in einem Verdichtungsbereich, insbesondere begrenzt durch einen Amboss und zwei Seitenwände, vorzugsweise umfassend mindestens einen Seitenschieber. Eine Arbeitsfläche der Sonotrode wird auf den Verbindungsbereich eines elektrischen Leiters gedrückt und eine Kompressionsfläche des Kompressionselements wird auf eine Umfangsfläche benachbart zum Verbindungsbereich, insbesondere eine isolierende Umhüllung des elektrischen Leiters, gedrückt, insbesondere durch eine Positionierungseinheit. Das Verfahren umfasst Ultraschallverbinden der zwei Verbindungsbereiche durch Beaufschlagung der Sonotrode mit Ultraschallschwingungen zu einem ersten Knoten.

Ein weiterer Verbindungsbereich eines elektrischen Leiters kann auf einen ersten Knoten angelegt werden, insbesondere in einer Vorschubrichtung der Sonotrode und des Kompressionselements. Die Arbeitsfläche der Sonotrode kann auf den weiteren Verbindungsbereich des elektrischen Leiters gedrückt werden und die Kompressionsfläche des Kompressionselements auf eine Umfangsfläche benachbart zum Verbindungsbereich, insbesondere auf die isolierende Umhüllung des elektrischen Leiters. Der weitere Verbindungsbereich und der erste Knoten können durch Beaufschlagung der Sonotrode mit Ultraschall verbunden werden.

Dies ermöglicht das zuverlässige Verbinden von drei oder mehr elektrischen Leitern, insbesondere Litzen, ohne ein Abscheren von Bestandteilen (z.B. Adern von Litzen) der Verbindungsbereiche, sodass eine Verbindung zu dem ersten Knoten der Verbindungsbereiche von höherer Qualität hergestellt werden kann.

Die Sonotrode und das Kompressionselement können in einer räumlichen Beziehung zueinander fixiert werden. Die Sonotrode und das Kompressionselement können unabhängig voneinander, etwa durch separate Positionierungsmodule der Positionierungseinheit, bewegt werden, oder gemeinsam, etwa durch ein gemeinsames Positionierungsmodul der Positionierungseinheit, um angedrückt zu werden.

Das Verfahren kann umfassen, dass ein zuvor beschriebener Abstand und/oder Versatz der Kompressionsfläche zur Arbeitsfläche geändert wird.

Das Einbringen einer Vielzahl von elektrischen Leitern, insbesondere mehr als zwei elektrischen Leitern, in einen Verdichtungsbereich zum Verbinden durch Beaufschlagung eines Werkzeugs mit Energie, insbesondere einer Sonotrode mit Ultraschall, führt oftmals zu einer Fehlausrichtung der elektrischen Leiter und/oder einer nicht optimalen Energieverteilung zum Verbinden der elektrischen Leiter. Besonders für elektrische Leiter mit hoher Querschnittsdimension kann somit oft nur unzureichend oder schwer genügend Energie zum Verschweissen zuverlässig und reproduzierbar appliziert werden.

WO 2015/067700 offenbart ein Leitelement zur axialen Positionierung der Leiter, welche in einer zweiten Achsenrichtung verschiebbar sind. Dieses Leitelement benötigt jedoch bewegliche Teile und ermöglicht insbesondere keine zuverlässige Anordnung und Führung von mehr als einem elektrischen Leiter angrenzend zum Leitelement.

Es ist daher die Aufgabe eines weiteren Aspekts der vorliegenden Erfindung, ein zuverlässiges, einfaches, und präzises Einführen der elektrischen Leiter in einen Verdichtungsbereich zu ermöglichen, welches eine einfache Handhabung der elektrischen Leiter, insbesondere für eine Vielzahl von elektrischen Leitern und Querschnittsdimensionen der elektrischen Leiter, erlaubt.

Ein weiterer Aspekt der Erfindung richtet sich daher auf eine Verbindungsvorrichtung, insbesondere eine zuvor beschriebene Ultraschallvorrichtung, zum Verbinden von zumindest zwei elektrischen Leitern zu einem ersten Knoten an Verbindungsbereichen der elektrischen Leiter. Die Verbindungsvorrichtung umfasst einen Verdichtungsbereich begrenzt durch einen Amboss und mindestens zwei Seitenwände, insbesondere umfassend einen Seitenschieber, vorzugsweise einen zuvor beschriebenen Seitenschieber. Die Verbindungsvorrichtung beinhaltet zumindest eine Führung benachbart zum Verdichtungsbereich. Die zumindest eine Führung weist zwei gegenüberliegende Führungsbacken auf, die vorzugsweise zu einer Seite in einer Richtung quer zur Richtung der elektrischen Leiter, insbesondere einer Oberseite, offen sind, sodass die elektrischen Leiter von dieser Seite und/oder in Richtung der Leiter, in die zumindest eine Führung einbringbar sind. Die Verbindungsvorrichtung umfasst ein Werkzeug, insbesondere eine Sonotrode, die an dem Verbindungsbereich von zumindest einem der elektrischen Leiter andrückbar ist, um die Verbindungsbereiche im Verdichtungsbereich durch Beaufschlagung mit Energie, insbesondere mit Ultraschall, zu einem ersten Knoten zu verbinden.

Die Verbindungsvorrichtung kann zwei Führungen aufweisen, insbesondere benachbart zu zwei seitlichen Einlegeöffnungen des Verdichtungsbereichs auf gegenüberliegenden Seiten des Verdichtungsbereichs. Somit können mindestens zwei Verbindungsbereiche der elektrischen Leiter durch zwei Einlegeöffnungen eingeführt werden und übereinander, vorzugsweise im Wesentlichen parallel zueinander, im Verdichtungsbereich platziert werden.

Der Begriff "benachbart" zu den Einlegeöffnungen im Zusammenhang der Führungen ist definiert als innerhalb eines Abstands von weniger als 5 cm, insbesondere weniger als 2.5 cm, vorzugsweise weniger als 1 cm, zu den Einlegeöffnungen. Zudem kann die Führung die Einlegeöffnung direkt kontaktieren.

Die Einlegeöffnungen können durch Ränder der Seitenwände, insbesondere der Seitenschieber, des Ambosses, und/oder der Sonotrode gebildet werden.

Diese zwei Führungen auf gegenüberliegenden Seiten ermöglichen, dass die elektrischen Leiter zuverlässig entlang einer gemeinsamen Ebene miteinander verbindbar sind. Die Verfahren können umfassen, dass zwei elektrischen Leiter parallel zueinander ausgerichtet werden, sodass die Verbindungsbereiche am Ende der zwei elektrischen Leiter übereinander im Verdichtungsbereich angeordnet sind.

Die mindestens eine Führung kann eine Höhe derart aufweisen, sodass zwei oder mehr elektrische Leiter übereinander zwischen den Führungsbacken einlegbar sind.

Dies ermöglicht mehrere elektrische Leiter von einer Seite in einer gemeinsamen Ausrichtung der Führung durch die Einlegeöffnung in den Verdichtungsbereich einzuführen, um an einem gemeinsamen Knoten verbunden zu werden. Zudem können die elektrischen Leiter einfach von der lateralen Seite, insbesondere der Oberseite, der Führung automatisiert oder manuell eingelegt werden. Zudem kann somit mit einer zuvor beschriebenen Verbindungsvorrichtung mit einer in Vorschub-/Rückschubrichtung bewegbaren Sonotrode zuverlässig der weitere Verbindungsbereich, vorzugsweise nur der weitere Verbindungsbereich, angedrückt und mit Ultraschall verbunden werden.

Die Vorschub-/Rückschubrichtung verläuft vorzugsweise parallel zu einer Längsachse der Öffnung, insbesondere der Öffnung auf der Oberseite. Die Vorschub-/Rückschubrichtung kann im Wesentlichen parallel zu einer Kontaktierungsoberfläche zum Kontaktieren der elektrischen Leiter der Führungsbacken verlaufen. Somit können die Verbindungsbereiche der elektrischen Leiter, welche übereinander im Zwischenraum der Führungsbacken anordenbar sind, in Vorschub-/Rückschubrichtung mit der Sonotrode zusammengedrückt werden.

Der Abstand zwischen den Führungsbacken kann änderbar sein, sodass die Führungsbacken zur Aufnahme elektrischer Leiter unterschiedlicher Querschnittsdimensionen angepasst werden kann. Die Führung kann ein Befestigungsbereich umfassen, insbesondere eine verstellbare Schiebemuttervorrichtung, oder einen Aktuator umfassen, sodass dieser Abstand zwischen den Führungsbacken geändert werden kann.

Zumindest eine der Kontaktierungsoberflächen der Führungsbacke kann abgeschrägt oder abgerundet sein. Somit können unterschiedliche Querschnittsdimensionen der elektrischen Leiter in die Führung eingebracht werden. Die Kontaktierungsoberflächen der Führungsbacken können spiegelsymmetrisch ausgebildet sein, sodass elektrischen Leiter unterschiedlicher Querschnittsdimensionen zentrisch im Verdichtungsbereich einbringbar sind.

Das Risiko der zuvor beschriebenen Abscherung von Bestandteilen des Verbindungsbereichs, insbesondere von Adern der Litze, durch Scherkräfte kann zudem reduziert werden, indem die Sonotrode typischerweise auf einer Seite einen abgerundeten Bereich der Arbeitsfläche umfasst. Bekannte Abrundungen sind jedoch oftmals unzureichend für grosse Querschnittsdimensionen von elektrischen Leitern. Der Übergang des elektrischen Leiters von einem Ende der isolierenden Umhüllung zum Verbindungsbereichs ist oftmals uneben. Insbesondere ist eine gegenüberliegende Seite des Verbindungsbereichs nicht genügend oder überhaupt nicht abgerundet und somit oftmals uneben. Besonders nachdem zwei elektrische Leiter zu einem ersten Knoten verbunden wurden, ist eine Platzierung eines weiteren elektrischen Leiters durch einen solchen Übergang nur unzureichend und/oder nur von einer Seite möglich.

Es ist daher die Aufgabe eines weiteren Aspekts der Erfindung, eine Sonotrode zur Verfügung zu stellen, die das Risiko des Abscherens weiter reduziert. Insbesondere soll eine seitenunabhängige Behandlung durch die Sonotrode ermöglicht werden, sodass der Knoten von zwei verbundenen elektrischen Leitern nicht bewegt/umgedreht werden muss und eine einfache Platzierung zumindest eines weiteren elektrischen Leiters auf dem Knoten ermöglicht wird.

Ein weiterer Aspekt der Erfindung richtet sich daher auf eine Sonotrode zum Verbinden von elektrischen Leitern in Verbindungsbereichen mit Ultraschallschwingungen. Die Sonotrode umfasst eine Arbeitsfläche zur Übertragung von Ultraschallschwingungen auf einen elektrischen Leiter, insbesondere einen Verbindungsbereich, vorzugsweise einer Litze. Die Arbeitsfläche weist an zwei gegenüberliegenden Endbereichen eine Abrundung auf. Zumindest eine Abrundung, insbesondere beide Abrundungen, weisen einen Krümmungsradius auf, welcher aus einem Bereich von 0,5 mm bis 5 mm, insbesondere 1 mm bis 4 mm, vorzugsweise 1,2 mm bis 2,4 mm, ausgewählt ist.

Die Arbeitsfläche kann eine längliche Riffelung aufweisen, die sich entlang einer Breite der Arbeitsfläche erstrecken, insbesondere parallel zu den Abrundungen. Die Arbeitsfläche kann zwei Plateaus aufweisen, die im Wesentlichen keine Riffelung aufweisen, und zwischen den Abrundungen und der länglichen Riffelung angeordnet sind.

Eine Länge der Arbeitsfläche kann aus einem Bereich von 8 mm bis 30 mm, insbesondere 12 mm bis 24 mm, vorzugsweise 13 mm bis 20 mm, ausgewählt werden.

Die Länge der Arbeitsfläche erstreckt sich in Richtung parallel zu einer longitudinalen Achse eines elektrischen Leiters.

Diese Länge ermöglicht eine grössere Arbeitsfläche bei Beibehaltung einer üblichen Breite einer Arbeitsfläche, welche zu einer höheren Zugfestigkeit des Knotens führt. Die Länge der Sonotrode kann grösser sein als eine Breite der Sonotrode.

Die Sonotrode kann in Längsrichtung spiegelsymmetrisch um ein Zentrum der Sonotrode ausgebildet sein.

Die Breite der Arbeitsfläche kann aus einem Bereich von 6 mm bis 30 mm, insbesondere 8 mm bis 25 mm, vorzugsweise 10 mm bis 20 mm, ausgewählt sein.

Die Breite der Arbeitsfläche erstreckt sich in Richtung quer zu der longitudinalen Achse des elektrischen Leiters.

Die Sonotrode kann eine Vielzahl von Arbeitsflächen, insbesondere mehr als zwei Arbeitsflächen, vorzugsweise vier Arbeitsflächen, umfassen. Die Arbeitsflächen können auf lateralen Seiten einer drehbaren Sonotrode angeordnet sein, insbesondere in einem Winkel von 90° relativ zueinander. Die Arbeitsflächen können angeordnet sein, sodass diese lediglich durch eine Rotation der Sonotrode miteinander vertauschbar sind. Somit können die Arbeitsflächen bei Verschleiss einer Arbeitsfläche leicht miteinander ausgetauscht werden.

Ein weiterer Aspekt der Erfindung richtet sich auf ein Verfahren zum Verbinden von mindestens zwei elektrischen Leitern an Verbindungsbereichen der elektrischen Leiter mit einer Sonotrode umfassend eine Arbeitsfläche zur Übertragung von Ultraschallschwingungen auf einen elektrischen Leiter. Die Arbeitsfläche weist an zwei gegenüberliegenden Endbereichen eine Abrundung auf. Das Verfahren umfasst, dass die mindestens zwei Verbindungsbereiche, insbesondere Litzen, übereinander in einem Verdichtungsbereich zwischen der Sonotrode und einem Amboss platziert werden. Das Verfahren enthält das Positionieren der Sonotrode auf einem der Verbindungsbereiche in dem Verdichtungsbereich. Das Verfahren enthält das Beaufschlagen der Sonotrode mit Ultraschallschwingungen zum Ultraschallverbinden der zwei Verbindungsbereiche zu einem ersten Knoten.

Der Abstand zwischen den Seitenwänden, insbesondere zwischen den Seitenschiebern, kann eine Breite des Verdichtungsbereichs definieren. Der Abstand kann so eingestellt werden oder gewählt sein, sodass diese weniger als 200% der Querschnittsdimension des Verbindungsbereichs, insbesondere weniger als 150% der Querschnittsdimensionen des Verbindungsbereichs, vorzugsweise im Wesentlichen 100% der Querschnittsdimension des Verbindungsbereichs, entspricht. Der Abstand kann auf diese Querschnittsdimension angepasst werden, bevor die mindestens zwei Verbindungsbereiche übereinander im Verdichtungsbereich zwischen Sonotrode und Amboss platziert werden. Somit können die elektrischen Leiter zumindest teilweise übereinander, vorzugsweise vollständig übereinander, im Verdichtungsbereich angeordnet werden.

Die Höhe des Verdichtungsbereichs kann in zumindest einem Verfahrensschritt mehr als 100% der Querschnittsdimension des Verbindungsbereichs, insbesondere mehr als 150% der Querschnittsdimension des Verbindungsbereichs, vorzugsweise mehr als 200% der Querschnittsdimension des Verbindungsbereichs betragen. Die Höhe des Verdichtungsbereichs ist der Abstand zwischen der Sonotrode und dem Amboss.

Somit können die Verbindungsbereiche zuverlässig zumindest teilweise übereinander angeordnet werden.

Die Höhe des Verdichtungsbereichs kann geändert werden, indem eine Sonotrode in einer Vorschubrichtung und einer Rückschubrichtung bewegt relativ zum Verdichtungsbereich bewegt wird.

Für eine Höhe von mehr als 200%, oder sogar mehr als 300%, der Querschnittsdimension kann ein weiterer Verbindungsbereich leicht, insbesondere von einer der Sonotrode zugewandten Seite, zwischen einen ersten Knoten und die Sonotrode eingeführt werden. Somit kann die Sonotrode jeweils den weiteren, insbesondere nur den weiteren, Verbindungsbereich kontaktieren, um diesen mit dem ersten Knoten durch Ultraschallverbinden zu verbinden.

Das Verfahren kann umfassen einen weiteren Verbindungsbereich auf dem Knoten im Verbindungsbereich zu platzieren, die Sonotrode auf dem weiteren Verbindungsbereich zu platzieren, und mit Ultraschallschwingungen zu beaufschlagen zum Ultraschallverbinden des mindestens einen weiteren Verbindungsbereichs mit dem Knoten. Das Verfahren kann durchgeführt werden, ohne den Knoten relativ zum Amboss zu bewegen.

Die Vorrichtungen und/oder Verfahren gemäss der vorliegenden Patentanmeldung sind so konzipiert, dass sie miteinander kompatibel sind und in Kombination verwendet werden können, um die jeweiligen Anwendung zu optimieren.

Die vorhergehend beschriebenen Ultraschallvorrichtungen können eine zuvor beschriebene Sonotrode umfassen.

Weitere Ausführungsformen der Erfindung und Verbesserungen der beschriebenen Ausführungsformen werden in der folgenden Beschreibung der Ausführungsformen deutlich.

Die Erfindung wird nun unter Bezugnahme auf bestimmte Ausführungsformen und Figuren beschrieben, die zeigen:
Figur 1A: eine perspektivische Ansicht einer erfindungsgemässen Sonotrode,
Figur 1B: eine Seitenansicht der Sonotrode nach Fig. 1A,
Figur 1C: eine Draufsicht der Sonotrode nach Figs. 1A und 1B,
Figur 1D: einen vergrösserten Ausschnitt der Sonotrode nach Fig. 1C,
Figur 2: eine perspektivische Ansicht eines Ambosses,
Figur 3: eine perspektivische Ansicht einer Führungsbacke der Führung für einen elektrischen Leiter,
Figuren 4A und 4B: eine perspektivische Darstellung einer Ultraschallvorrichtung umfassend zwei gegenüberliegende Führungen für elektrische Leiter und einen Verdichtungsbereich begrenzt durch Seitenschieber und einen Amboss, Figuren 5A und 5B: eine schematische Seitenansicht der Ultraschallvorrichtung mit einer Sonotrode und einem Kompressionselement zum Verbinden von zwei Verbindungsbereichen,
Figuren 6A bis 6C: eine unzureichend Ultraschallverbindung des weiteren Verbindungsbereichs mit dem ersten Knoten, eine mangelhafte Ultraschallverbindung des weiteren Verbindungsbereichs mit dem ersten Knoten, und eine gute Ultraschallverbindung des weiteren Verbindungsbereichs mit dem ersten Knoten.

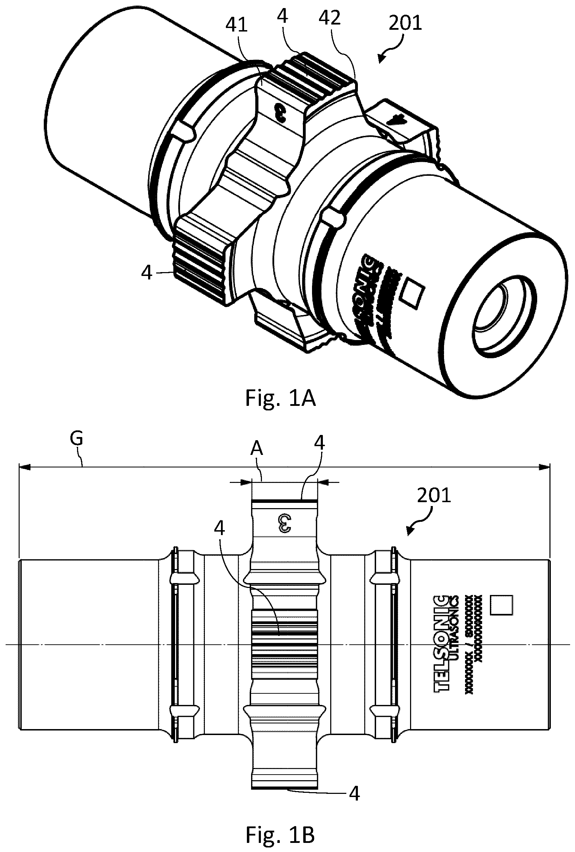

Figur 1A zeigt eine perspektivische Ansicht einer erfindungsgemässen Sonotrode 201. Die Sonotrode 201 ist eine rotierbare Sonotrode 201, die vier Arbeitsflächen 4 aufweist. Die vier Arbeitsflächen 4 sind jeweils in 90° voneinander beabstandet und zur in Richtung der vier lateralen Raumrichtungen der Sonotrode 201 ausgerichtet. Somit kann die Sonotrode 201 rotiert werden, um die Arbeitsflächen 4 zu wechseln, falls diese verschlissen ist. Die Arbeitsflächen 4 weisen einen zentrischen Bereich mit einer länglichen Riffelung, die sich parallel zu einer longitudinalen Achse der Sonotrode 201 erstreckt. Die Arbeitsfläche 4 ist zum Ultraschallverbinden von elektrischen Leitern so an den elektrischen Leiter anlegbar, dass die längliche Riffelung quer zur longitudinalen Ausrichtung der Leiter verläuft. An gegenüberliegenden Endbereichen der Arbeitsfläche 4 sind jeweils Abrundungen 41, 42 angeordnet. Die Abrundungen 41, 42 können longitudinale Enden der Verbindungsbereiche beim Ultraschallverbinden kontaktieren. Somit können die Litzen durch Ultraschallbeaufschlagung zu einem Knoten verbunden werden ohne, dass die longitudinalen Enden uneben sind, beziehungsweise hervorstehende Einzeldrähte aufweisen.

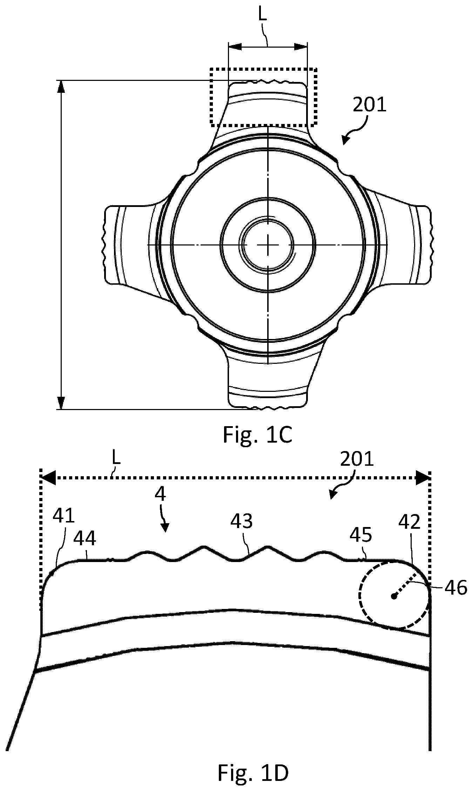

Figur 1B zeigt eine Seitenansicht der Sonotrode 201 nach Fig. 1. Die Sonotrode weist eine Gesamtlänge G von 146,2 mm auf. Die Arbeitsfläche weist eine Ausdehnung A von 18 mm auf. Diese Ausdehnung der Sonotrode 201 verläuft quer zu den zu verschweissenden elektrischen Kabeln.
Figur 1C zeigt eine Draufsicht der Sonotrode 201 nach Figs. 1A und 1B. Die Sonotrode 201 weist eine Länge L von 19 mm auf. Diese Länge L der Sonotrode 201 verläuft parallel zu den zu verschweissenden elektrischen Kabeln.
Figur 1D zeigt einen vergrösserten Ausschnitt der Sonotrode 201 nach Fig. 1C. Die Sonotrode 201 weist einen zentrischen geriffelten Bereich 43 mit länglichen Riffelungen auf. Die länglichen Riffelungen des geriffelten Bereichs 43 verlaufen quer zur Länge L und haben entlang der gesamten Ausdehnung A (siehe Fig. 1B). Die Arbeitsfläche 4 weist im Wesentlichen ein gleichbleibendes Querschnittsprofil auf. Der geriffelte Bereich 43 weist eine stärkere Riffelung, also eine Riffelung mit einem stärker variierendem Höhenprofil auf, in einem Zentrum des geriffelten Bereichs 43 auf, die in Richtung der beiden Endbereiche schwächer wird, also eine geringere Schwankung des Höhenprofils aufweist. An den Endbereichen der Arbeitsfläche 4 weist die Sonotrode 201 Abrundungen 41, 42 auf gegenüberliegenden Seiten auf. Zwischen den Abrundungen 41, 42 und dem zentrischen geriffelten Bereich 43 ist jeweils ein Plateau 44, 45 angeordnet. Die Plateaus 44, 45 sind im Wesentlichen parallel zu einer Längsachse der Arbeitsfläche 4 ausgerichtet.

Die Abrundungen 41, 42 weisen einen Krümmungsradius 46 von 1,8 mm auf. Dieser Krümmungsradius 46 ermöglicht eine besonders zuverlässige Ultraschallverbindung eines Verbindungsbereichs zu einem Knoten, ohne zu grosse Scherkräfte zu erzeugen, selbst für elektrische Leiter mit hohen Querschnittsdimensionen, insbesondere Kabeln von einer Querschnittsdimension von mehr als 150 mm². Zudem ermöglicht der Krümmungsradius 46 einen glatten Randbereich auf beiden longitudinalen Seiten eines Verbindungsbereichs des elektrischen Leiters, ohne hervorstehende Litzenbestandteile. Somit muss der beim Ultraschallverbinden entstehende Knoten nicht repositioniert werden, um weitere Verbindungsbereiche, insbesondere Litzen, weiterer Kabel anzubringen, da beide longitudinale Seiten durch die Abrundungen 44, 45 abgerundet werden. Es können somit weitere Kabel von beiden Seiten, also richtungsunabhängig, angelegt und zuverlässig verbunden werden.

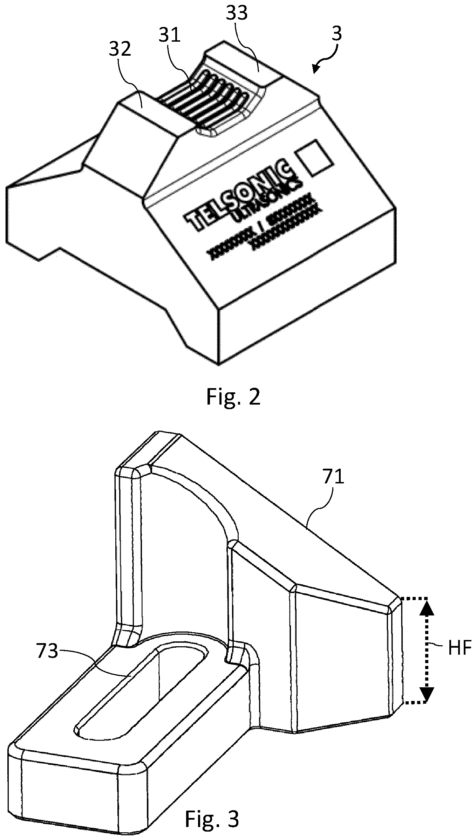

Figur 2 zeigt eine perspektivische Ansicht eines Ambosses 3 umfassend eine Grundfläche 31. Die Grundfläche 31 ist im Wesentlichen horizontal ausgerichtet. Die Grundfläche 31 weist eine abgesenkte Form auf, sodass die Verbindungsbereiche zuverlässig zum Ultraschallverbinden darin aufgenommen werden können. Die Grundfläche 31 ist durch geradlinige Segmente gebildet, die die abgesenkte Form bilden. Die abgesenkte Grundfläche weist zudem Riffelungen auf, die quer zu den zu verbindenden elektrischen Leitern verlaufen.

Auf gegenüberliegenden lateralen Endbereichen der Grundfläche 31 sind zwei Plattformen 32, 33 angeordnet. Die Plattformen 32, 33 bilden eine im Wesentlichen horizontale Ebene aus. Diese Plattformen 32, 33 der Grundfläche 31 können mit Seitenwänden, insbesondere Seitenschiebern, der Ultraschallvorrichtung abschliessen. Durch die horizontale Ausrichtung der Plattformen 32, 33 in einer Betriebsposition des Ambosses 3 kann zudem eine Breite des Verdichtungsbereich durch laterales Verschieben der Seitenschieber einfach eingestellt werden, falls die Ultraschallvorrichtung Seitenschieber zur Einstellung der Breite umfasst.

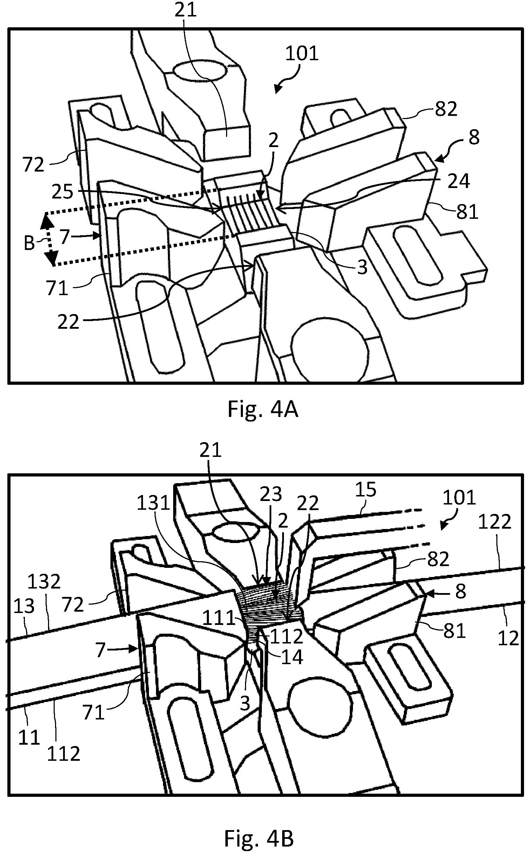

Figur 3 zeigt eine perspektivische Ansicht einer Führungsbacke 71 einer Führung für einen elektrischen Leiter, insbesondere eines elektrischen Kabels umfassend einer isolierenden Umhüllung. Die Führungsbacke 71 kann lateral zum elektrischen Leiter bewegbar sein. Die Führungsbacke 71 kann durch eine Schiebemuttervorrichtung 73 lateral fixiert werden (die Schraube der Verbindung wurde nicht in Fig. 3 dargestellt). Somit können die Abstände und/oder die Position der Führungsbacken 71, 72 (siehe Figs. 4A und 4B) einer Führung 7 zueinander angepasst werden, um elektrische Leiter unterschiedlicher Querschnittsdimensionen aufzunehmen.

Eine Oberseite der Führungsbacken 71, 72 ist in Richtung des Verdichtungsbereichs abgeschrägt, sodass die Höhe HF der Führungsbacke zum Verdichtungsbereich abnimmt. Die Höhe HF der Führungsbacke ist somit ausreichend, um zwei elektrische Leiter übereinander aufzunehmen. Die Führungsbacke 71 ist jedoch geformt und dimensioniert, um eine absenkbare Sonotrode und/oder ein Kompressionselement einer Ultraschallvorrichtung nicht zu blockieren. Die Führungsbacke 71 kann in einem solchen Masse abgeschrägt sein, sodass zwei elektrische Leiter, die übereinander zwischen den Führungsbacken 71, 72 angeordnet sind zumindest in einem vorderen Bereich der Führungsbacken 71, 72 von der Oberseite hervorstehen, also eine grössere gemeinsame Querschnittsdimension als die Höhe HF aufweisen.

Figuren 4A und 4B zeigen eine perspektivische Darstellung einer Ultraschallvorrichtung 101 umfassend zwei gegenüberliegende Führungen 7, 8 für elektrische Leiter 11, 12, 13 und einen Verdichtungsbereich 2 begrenzt durch Seitenschieber 21, 22 und einen Amboss 3.

Die Führungen 7, 8 weisen jeweils zwei Führungsbacken 71, 72; 81, 82 auf. Die Abstände zwischen den Führungsbacken 71, 72; 81, 82 der Führungen 7, 8 können jeweils durch Schiebemuttervorrichtungen angepasst werden, sodass jeweils ein elektrischer Leiter 11, 12, 13 in einem Zwischenraum aufgenommen werden kann. Denkbar ist aber auch ein elektrischer Antrieb, z.B. durch Schrittmotoren. Es können jedoch mehrere elektrische Leiter 11, 12, 13 übereinander in den Führungsbacken 71, 72; 81, 82 aufgenommen werden (siehe Fig. 4B).

Die Seitenschieber 21, 22 der Ultraschallvorrichtung 101 sind vertikal und horizontal beweglich, sodass eine Breite B des Verdichtungsbereichs 2 einstellbar ist. Die Seitenschieber 21, 22 können somit zudem mit den Plattformen 32, 33 einer Grundfläche 31 des Amboss 3 abschliessen, sodass der Verdichtungsbereich 2 zuverlässig zu den lateralen Seiten schliessbar ist (siehe Fig. 2) .

Der Verdichtungsbereich 2 weist zwei Einlegeöffnungen 24, 25 auf, die auf beiden Seiten durch die Seitenschieber 21, 22 begrenzt werden und nach unten vom Amboss 3 begrenzt werden (siehe Fig. 4B).

Die Führungsbacken 71, 72; 81, 82 sind unmittelbar benachbart zu den Einlegeöffnungen 24, 25 angeordnet und bilden eine nach oben offene Seite aus, sodass die elektrischen Leiter leicht in die Führungen 7; 8 und den Verdichtungsbereich 2 eingelegt werden können. Die elektrischen Leiter 11, 12, 13 können im Wesentlichen parallel zu den Führungsbacken 71, 72; 81, 82 in den Verdichtungsbereich 2 eingeführt werden. Die Führungsbacken 71, 72; 81, 82 sind angeschrägt, sodass die Höhe der Führungsbacken 71, 72; 81, 82 in Richtung der Verdichtungsbereichs 2 abnimmt (siehe Fig. 3).

Die Leiter 11, 12, 13 bilden ein Kabel und weisen jeweils eine isolierende Umhüllung 112, 122, 132 auf, die die Litzen des Kabels elektrisch isoliert. Die Leiter 11, 12, 13 weisen jeweils einen Verbindungsbereich 111, 121, 131 auf, der durch die Litzen an einem longitudinalen Ende des Leiters 11, 12, 13 gebildet wird.

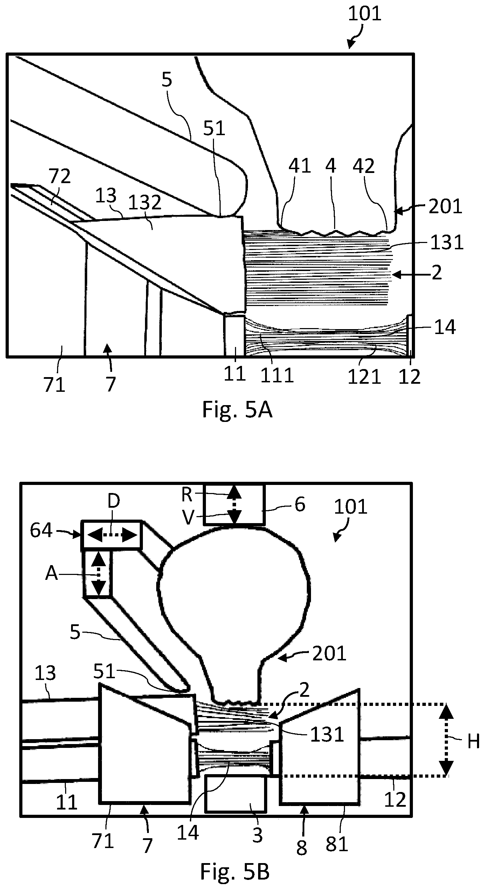

Figur 4B zeigt die Ultraschallvorrichtung 101 in einer Betriebsposition 23. Figur 4B zeigt zudem, dass zwei Verbindungsbereiche 111, 112 der elektrischen Leiter 11, 12 zu einem ersten Knoten 14 durch Ultraschallbeaufschlagung einer Sonotrode zusammengeschweisst wurden (siehe Figs. 5A und 5B). Die Sonotrode, die über dem Verdichtungsbereich 2 angeordnet ist, wurde für eine bessere Sichtbarkeit in Figs. 4A und 4B nicht dargestellt. Ein weiterer elektrischer Leiter 13 verläuft parallel zu dem ersten elektrischen Leiter 11 und ist senkrecht über dem ersten elektrischen Leiter 11 zwischen den Führungsbacken 71, 72 der Führung 7 angeordnet. Der Zwischenraum der Führung 7 hat eine laterale Dimension, die einer Querschnittsdimension der elektrischen Leiter 11, 13 entspricht, sodass diese lediglich übereinander in der Führung 7 platziert werden können.

Der weitere Verbindungsbereich 131 des weiteren elektrischen Leiters 13 wurde in Fig. 4B in den Verdichtungsbereich 2 eingeschoben. Damit der weitere Verbindungsbereich 131 nicht zu weit eingeschoben wird, weist die Ultraschallvorrichtung 101 einen Einschubbegrenzungselement 15 auf, welches verhindert, dass der weitere Verbindungsbereich 131 hinter die gegenüberliegende Eingangsöffnung 24 des Verdichtungsbereichs 2 vorgeschoben wird.

Wenn der weitere Verbindungsbereich 131 auf dem Knoten 14 anliegt, kann die Sonotrode von der Oberseite her auf den Verbindungsbereich 131 abgesenkt werden. Die Sonotrode kann daraufhin durch Ultraschallbeaufschlagung den weiteren Verbindungsbereich 131 mit dem ersten Knoten 14 verbinden.

Die Ultraschallvorrichtung 101 kann speziell zur Verbindung von elektrischen Leiter 11, 12, 13 mit Querschnittsdimensionen grösser 150 mm² geformt sein. Die Sonotrode der Ultraschallvorrichtung weist zu diesem Zweck vorzugsweise zwei Abrundungen auf (siehe Figs. 1A - 1D), sodass die Litzen zu beiden longitudinalen Seiten der Verbindungsbereiche 111, 121, 131 beim Verschweissen abgeflacht werden und Scherkräfte minimiert werden. Zudem kann die Ultraschallvorrichtung 101 ein Kompressionselement 5 aufweisen (siehe Figs. 5A und 5B), welches ebenfalls die Scherkräfte minimiert, indem Druck auf die isolierende Umhüllung 112, 122, 132 ausgeübt werden kann, während die Sonotrode auf den Verbindungsbereich 111, 121, 131 abgesenkt wird.

Figuren 5A und 5B zeigen eine schematische Seitenansicht der Ultraschallvorrichtung 101 mit einer Sonotrode 201 und einem Kompressionselement 5.

Die Figuren 5A und 5B zeigen zwei Verbindungsbereiche 111, 121 der elektrischen Leiter 11, 12, die durch Ultraschallbeaufschlagung der Sonotrode 201 zu einem ersten Knoten 14 verbunden wurden. Die elektrischen Leiter 11, 12, 13 werden durch Führungen 7, 8 (siehe Fig. 5B) in einen zuvor beschriebenen Verdichtungsbereich 2 eingeführt. Der Verdichtungsbereich 2 in Figs. 5A und 5B wurde für eine bessere Sichtbarkeit ohne die Seitenwände/Seitenschieber dargestellt. Die Führungen 7, 8 weisen jeweils zwei Führungsbacken 71, 72; 81 auf, sodass mehrere elektrische Leiter 11, 13 übereinander in einem Zwischenraum der Führung 7 von einer offenen Oberseite der Führung 7, welche der Sonotrode 201 zugewandt ist, eingelegt werden können. Die Sonotrode 201 weist eine zuvor beschriebene Arbeitsfläche 4 mit zwei Abrundungen 41, 42 auf. Die Sonotrode 201 ist entlang einer Vorschub- und Rückschubrichtung V, R bewegbar. Somit kann die Sonotrode 201 in den Verdichtungsbereich 2 abgesenkt und aus dem Verdichtungsbereich 2 angehoben werden. Die Verbindungsbereiche 111, 131 elektrischen Leiter 11, 13 sind entlang einer Achse der Vorschub- und Rückschubrichtung der Sonotrode übereinander angeordnet. Die Arbeitsfläche 4 der Sonotrode 201 kann somit den weiteren Verbindungsbereich 131 des weiteren elektrischen Leiters 13 von oben nach unten auf den ersten Knoten 14 drücken. Die Sonotrode 201 kann daraufhin den weiteren Verbindungsbereich 131 mit dem ersten Knoten 14 durch Ultraschallbeaufschlagung verschweissen.

Das Kompressionselement 5 weist eine Kompressionsfläche 51 auf. Die Kompressionsfläche 51 ist an eine isolierende Umhüllung 132 des weiteren elektrischen Leiters 13 andrückbar. Während die Arbeitsfläche 4 der Sonotrode 201 in Vorschubrichtung V auf den weiteren Verbindungsbereich 131 in Richtung eines Amboss 3 gedrückt wird, drückt die Kompressionsfläche 51 des Kompressionselements 5 die isolierende Umhüllung 132 in Vorschubrichtung V. Die Kompressionsfläche 51 ist abgerundet, sodass übertragene Scherkräfte auf die isolierende Umhüllung 132 reduziert werden. Zudem weist die Kompressionsfläche 51 eine Breite auf, die ausreichend ist, den weiteren elektrischen Leiter 13 entlang einer gesamten Querschnittsdimension des weiteren elektrischen Leiters 13 zu kontaktieren und gleichmässig in Schubrichtung zu drücken.

Figur 5B zeigt eine Positioniereinheit 6, die die Sonotrode 201 gemeinsam mit dem Kompressionselement 5 in die Vor-/Rückschubrichtung V, R bewegen kann. Alternativ kann die Sonotrode 201 und das Kompressionselement 5 mit separaten Positionierungsmodulen unabhängig voneinander bewegbar sein.

Durch eine solche Positionierungseinheit 6 können die Arbeitsfläche 4 und die Kompressionsfläche 51 zuverlässig zusammen während des Zusammendrückens des weiteren Verbindungsbereichs 131 mit dem ersten Knoten 14 bewegt werden. Das Kompressionselement 5 kann mit der Sonotrode 201 mit einer Fixiermechanismus 64 verbunden sein, welche einen Abstand A in Vor-/Rückschubrichtung V, R und einen Versatz D quer zur Vor-/Rückschubrichtung V, R zu ändern. Somit kann der Abstand A und der Versatz D auf unterschiedliche Querschnittsdimensionen der elektrischen Leiter 11, 12, 13 und Dicken der isolierenden Umhüllung der elektrischen Leiter 11, 12, 13 angepasst werden.

Eine Höhe H des Verdichtungsbereichs 2 kann durch die Bewegung der Arbeitsfläche 4 in Vor-/Rückschubrichtung V, R angepasst werden. Die Sonotrode 201 in Figs. 5A und 5B ist dimensioniert und geformt, um zumindest zwei Verbindungsbereiche 111, 131 der elektrischen Leiter 11, 13, beziehungsweise einen ersten Knoten 14 und einen weiteren Verbindungsbereich 131, übereinander im Verdichtungsbereich 2 aufzunehmen.

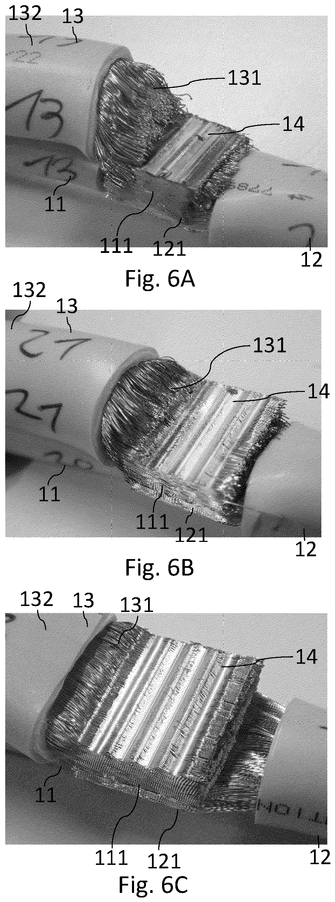

Figuren 6A bis 6B zeigen eine unzureichend Ultraschallverbindung des weiteren Verbindungsbereichs 131 mit dem ersten Knoten 14, eine mangelhafte Ultraschallverbindung des weiteren Verbindungsbereichs 131 mit dem ersten Knoten 14, und eine gute Ultraschallverbindung des weiteren Verbindungsbereichs 131 mit dem ersten Knoten 14. Die elektrischen Leiter 11, 12, 13 werden durch Kabel gebildet, die eine isolierende Umhüllung aufweisen.

Die Verbindungsbereiche 111, 121, 131 der elektrischen Leiter 11, 12, 13 werden durch Litzen am Ende der Kabel gebildet.

Der erste Knoten 14 ist durch die Ultraschallverbindung der zwei Verbindungsbereiche 111, 121 der ersten beiden elektrischen Leiter 11, 12 gebildet worden. Ein weiterer elektrischer Leiter 13 ist in Figs. 6A bis 6C parallel und aufliegend auf dem ersten elektrischen Leiter 11 angeordnet, sodass der weitere Verbindungsbereich 131 auf dem ersten Knoten 14 anliegt.

In Fig. 6A wurde eine Vielzahl an Einzeldrähten des weiteren Verbindungsbereichs 131, der durch eine Litze gebildet wird, beim Ultraschallschweissen durch Scherkräfte abgetrennt. In Fig. 6C wurden die Einzeldrähte zwar nicht abgetrennt, sind jedoch schon deutlich verformt, sodass die Verbindung des weiteren Verbindungsbereichs 131 mit dem Knoten 14 unzureichend ist.

Figur 6C zeigt eine gute Ultraschallverbindung des weiteren Verbindungsbereichs 131 mit dem ersten Knoten 14, welche durch die Verwendung eines zuvor beschriebenen Kompressionselements 5 und einer beidseitig abgerundeten Sonotrode 201 erzielt wurde (siehe Figs. 5A und 5B). Durch die Abrundungen der Sonotrode 201 kann der weitere elektrische Leiter 13 zudem von beiden longitudinalen Seiten parallel zu einem der elektrischen Leiter 11, 12 angelegt werden, da der erste Knoten 14 eine im Wesentlichen spiegelsymmetrische Form entlang einer Längsachse aufweist.

## Patentansprüche

1. Verfahren zum Verbinden einer Vielzahl von elektrischen Leitern (11, 12, 13) an Verbindungsbereichen (111, 121, 131) der elektrischen Leiter (11, 12, 13) umfassend:
- Bereitstellen eines Verdichtungsbereichs (2), der begrenzt ist durch mindestens zwei Seitenwände, insbesondere umfassend mindestens einen Seitenschieber (21, 22), einen Amboss (3), und ein Werkzeug zur Einleitung von Energie, insbesondere eine Sonotrode (201),
- Einführen mindestens zweier Verbindungsbereiche (111, 121) der elektrischen Leiter (11, 12) in den Verdichtungsbereich (2),
- Positionieren des Werkzeugs, insbesondere der Sonotrode (201) auf zumindest einem der Verbindungsbereiche (111, 121) in dem Verdichtungsbereich (2),
- Beaufschlagung des Werkzeugs, insbesondere der Sonotrode mit Energie, insbesondere Ultraschallschwingungen, zum Verbinden der mindestens zwei Verbindungsbereiche (111, 121) der elektrischen Leiter (11, 12) und Erzeugen eines ersten Knotens (14),
- Entfernen des Werkzeugs, insbesondere der Sonotrode (201) aus dem Verdichtungsbereich (2),
- Anlegen eines weiteren Verbindungsbereichs (131) eines weiteren elektrischen Leiters (13) auf dem ersten Knoten (14), insbesondere von einer Oberseite her,
- Positionieren des Werkzeugs, insbesondere der Sonotrode (201) auf dem weiteren Verbindungsbereich (131),
- Beaufschlagen des Werkzeugs, insbesondere der Sonotrode (201) mit Energie, insbesondere Ultraschallschwingungen, zum Verbinden des weiteren Verbindungsbereichs (131) mit dem ersten Knoten (14).

2. Verfahren nach Anspruch 1, wobei zumindest eine der zwei Seitenwände einen Seitenschieber (21, 22) umfasst, enthaltend den weiteren Schritt: Bewegen des mindestens einen Seitenschiebers (21, 22) in die Betriebsposition (23), wobei der mindestens eine Seitenschieber (21, 22) in der Betriebsposition (23) den Verdichtungsbereich (2), vorzugsweise mit einer Fläche des Ambosses (3), abschliesst.

3. Verfahren nach Anspruch 2, wobei der mindestens eine Seitenschieber (21, 22) vor dem Ultraschallverbinden der zwei Verbindungsbereiche (111, 121) in die Betriebsposition (23) bewegt wird und zumindest bis zum Ultraschallverbinden des weiteren Verbindungsbereichs (131) mit dem ersten Knoten (14) in der Betriebsposition (23) bleibt.

4. Verfahren nach einem der vorhergehenden Ansprüche, wobei der Amboss (3) eine Grundfläche des Verdichtungsbereichs (2) bildet, insbesondere eine im Wesentlichen horizontale Grundfläche.

5. Verfahren nach einem der vorhergehenden Ansprüche, wobei der mindestens eine Seitenschieber (21, 22) und/oder der Amboss (3) horizontal und vertikal bewegbar sind, sodass der mindestens eine Seitenschieber (21, 22) mit der Fläche, insbesondere der Grundfläche (31), des Ambosses (3) den Verdichtungsbereich (2) abschliesst.

6. Verfahren nach einem der vorhergehenden Ansprüche, wobei die elektrischen Leiter (11, 12, 13) mit einer isolierenden Umhüllung (112, 122, 132) versehen sind und der Verbindungsbereich (111, 121, 131) der elektrischen Leiter (11, 12, 13) von der Umhüllung (112, 122, 132) befreit ist und der Verbindungsbereich (111, 121, 131) vorzugsweise durch eine Litze gebildet wird.

7. Verfahren nach einem der vorhergehenden Ansprüche, wobei der erste Knoten (14) der zwei Verbindungsbereichen (111, 121) relativ zum Verdichtungsbereich (2) fixiert wird, zumindest bis der weitere Verbindungsbereich (131) mit dem ersten Knoten (14) verbunden wird.

8. Verbindungsvorrichtung, insbesondere Ultraschallvorrichtung, (101) zum Verbinden von zumindest zwei elektrischen Leitern (11, 12), welche insbesondere eine isolierende Umhüllung (112, 122) aufweisen, zu einem ersten Knoten (14) an Verbindungsbereichen (111, 121) der elektrischen Leiter, umfassend:
- Ein Werkzeug, insbesondere eine Sonotrode (201), die eine Arbeitsfläche (4) aufweist, die in einer Vorschubrichtung (V) gegen den Verbindungsbereich (111, 121) von zumindest einem der elektrischen Leiter (11, 12, 13) andrückbar ist, um die Verbindungsbereiche (111, 121) durch Einleiten von Energie, insbesondere Ultraschall zu dem ersten Knoten (14) zu verbinden,
- Ein Kompressionselement (5), welches eine Kompressionsfläche (51) aufweist, die im Wesentlichen in der Vorschubrichtung (V) gegen eine Umfangsfläche des elektrischen Leiters benachbart zum Verbindungsbereich, insbesondere gegen die isolierende Umhüllung (112, 122), andrückbar ist.

9. Verbindungsvorrichtung nach Anspruch 8, wobei die Verbindungsvorrichtung(101) eine Positionierungseinheit (6) umfasst, mit welcher die Arbeitsfläche (4) der Sonotrode (201) auf den Verbindungsbereich (111, 121) andrückbar ist und mit welcher die Kompressionsfläche (51) des Kompressionselements (5) auf die isolierende Umhüllung (112, 122) andrückbar ist.

10. Verbindungsvorrichtung (101) nach Anspruch 9, wobei die Sonotrode (201) und das Kompressionselement (5) in einer definierten räumlichen Beziehung zueinander fixiert oder fixierbar sind, und die Sonotrode (201) und das Kompressionselement (5) gemeinsam mit der Positionierungseinheit (6) bewegbar und gemeinsam auf den elektrischen Leiter (11, 12, 13) andrückbar sind, sodass ein im Wesentlichen gleichmässiger Druck auf den Verbindungsbereich (111, 121) und die isolierende Umhüllung (112, 122) ausübbar ist.

11. Verbindungsvorrichtung nach einem der Ansprüche 8 bis 10, wobei ein Abstand (A) in Vorschubrichtung (V) und/oder ein Versatz (D) quer zur Vorschubrichtung (V) der Kompressionsfläche (51) relativ zur Arbeitsfläche (4) änderbar ist.

12. Verbindungsvorrichtung nach einem der Ansprüche 8 bis 11, wobei die Kompressionsfläche (51) eine Breite von mehr als 10 mm, insbesondere mehr als 14 mm, vorzugsweise mehr als 17 mm, aufweist.

13. Verfahren zum Verbinden von zumindest zwei, insbesondere eine isolierende Umhüllung (112, 122, 132) aufweisenden, elektrischen Leitern (11, 12, 13) an Verbindungsbereichen (111, 121, 131) der elektrischen Leiter (11, 12, 13), welche von der Umhüllung (112, 122, 132) befreit sind, insbesondere unter Verwendung einer Verbindungsvorrichtung nach einem der Ansprüche 8 - 11, umfassend:
- Positionieren von zwei Verbindungsbereichen (111, 121) in einem Verdichtungsbereich (2), insbesondere begrenzt durch einen Amboss (3) und zwei Seitenwände, vorzugsweise umfassend mindestens einen Seitenschieber (21, 22),
- Drücken einer Arbeitsfläche (4) der Sonotrode (201) auf den Verbindungsbereich (111, 121) eines der elektrischen Leiter (11, 12, 13)
und Drücken einer Kompressionsfläche (51) eines Kompressionselements (5) eine Umfangsfläche, insbesondere auf die isolierende Umhüllung (112, 122, 132) des elektrischen Leiters (11, 12, 13), insbesondere durch eine Positionierungseinheit (6),
- Ultraschallverbinden der zwei Verbindungsbereiche (111, 121) durch Beaufschlagung der Sonotrode (201) mit Ultraschallschwingungen zu einem ersten Knoten (14).

14. Verbindungsvorrichtung, insbesondere Ultraschallvorrichtung (101), insbesondere nach einem der Ansprüche 8 - 12, zum Verbinden von zumindest zwei elektrischen Leitern (11, 12) zu einem ersten Knoten (14) an Verbindungsbereichen (111, 121) der elektrischen Leiter (11, 12), umfassend:
- Einen Verdichtungsbereich (2) begrenzt durch einen Amboss (3) und mindestens zwei Seitenwände, insbesondere umfassend mindestens einen Seitenschieber (21, 22),
- Zumindest eine Führung (7) benachbart zum Verdichtungsbereich (2) zum Positionieren der elektrischen Leiter (11, 12) im Verbindungsbereich (111, 121), wobei die zumindest eine Führung (7) zwei gegenüberliegende Führungsbacken (71, 72) aufweist, die vorzugsweise zumindest zu einer lateralen Seite, insbesondere einer Oberseite, offen sind, sodass die elektrischen Leiter (11, 12, 13) von der lateralen Seite in die zumindest eine Führung (7) einbringbar sind,
- Eine Sonotrode (201), die an dem Verbindungsbereich (111, 121) von zumindest einem der elektrischen Leiter (11, 12) andrückbar ist, um die Verbindungsbereiche (111, 121) im Verdichtungsbereich (2) durch Beaufschlagung der Sonotrode (201) mit Ultraschall zu einem ersten Knoten (14) zu verbinden.

15. Verbindungsvorrichtung, insbesondere Ultraschallvorrichtung nach Anspruch 14, wobei die Verbindungsvorrichtung (101) zwei Führungen (7, 8) aufweist, insbesondere benachbart zu zwei seitlichen Einlegeöffnungen (24, 25) des Verdichtungsbereichs (2) auf gegenüberliegenden Seiten des Verdichtungsbereichs (2), sodass mindestens zwei Verbindungsbereiche (111, 121, 131) der elektrischen Leiter (11, 12, 13) übereinander, und vorzugsweise im Wesentlichen parallel zueinander, im Verdichtungsbereich (2) platzierbar sind.

16. Verbindungsvorrichtung nach einem der Ansprüche 14 oder 15, wobei die mindestens eine Führung (7) eine Höhe derart aufweist, sodass zwei oder mehr elektrische Leiter (11, 12, 13) übereinander zwischen den Führungsbacken (71, 72) einlegbar sind.

17. Sonotrode (201) zum Verbinden von elektrischen Leitern (11, 12, 13) in Verbindungsbereichen (111, 121, 131) mit Ultraschallschwingungen, umfassend eine Arbeitsfläche (4) zur Übertragung von Ultraschallschwingungen auf einen elektrischen Leiter, insbesondere eine Litze, wobei die Arbeitsfläche (4) an zwei gegenüberliegenden Endbereichen eine Abrundung (41, 42) aufweist, **dadurch gekennzeichnet, dass** zumindest eine Abrundung (41, 42), insbesondere beide Abrundungen (41, 42), einen Krümmungsradius aufweisen, welcher aus einem Bereich von 0,5 mm bis 5 mm, insbesondere 1 mm bis 4 mm, vorzugsweise 1,2 mm bis 2,5 mm, ausgewählt ist.

18. Sonotrode nach Anspruch 17, wobei eine Länge der Arbeitsfläche (4) aus einem Bereich von 10 mm - 30 mm, insbesondere 14 mm - 25 mm, vorzugsweise 16 mm - 20 mm, ausgewählt ist.

19. Sonotrode nach einem der Ansprüche 17 oder 18, wobei eine Breite der Arbeitsfläche (4) aus einem Bereich von 10 mm - 30 mm, insbesondere 14 mm - 25 mm, vorzugsweise 16 mm - 20 mm, ausgewählt ist.

20. Verfahren zum Verbinden von mindestens zwei elektrischen Leitern (11, 12, 13) an Verbindungsbereichen (111, 121, 131) der elektrischen Leiter (11, 12, 13) mit einer Sonotrode (201), insbesondere eine Sonotrode (201) nach einem der Ansprüche 17 - 19, umfassend eine Arbeitsfläche (4) zur Übertragung von Ultraschallschwingungen auf einen elektrischen Leiter (11, 12, 13), wobei die Arbeitsfläche (4) an zwei gegenüberliegenden Endbereichen eine Abrundung (41, 42) aufweist umfassend:
- Platzieren von mindestens zwei Verbindungsbereichen (111, 121), insbesondere Litzen, übereinander in einem Verdichtungsbereich (2) zwischen der Sonotrode (201) und einem Amboss (3),
- Positionieren der Sonotrode (201) auf einem der Verbindungsbereiche (111, 121) in dem Verdichtungsbereich (2),
- Beaufschlagen der Sonotrode mit Ultraschallschwingungen zum Ultraschallverbinden der mindestens zwei Verbindungsbereiche (111, 121) zu einem ersten Knoten.

21. Ultraschallvorrichtung (101) nach einem der Ansprüche 8 - 12 oder 14 - 16 umfassend eine Sonotrode (201) nach einem der Ansprüche 17 - 19.
